# EUROPÄISCHE PATENTSCHRIFT

(11) **EP 2 904 674 B1**
(45) Veröffentlichungstag und Bekanntmachung des Hinweises auf die Patenterteilung: **30.05.2018**
(21) Anmeldenummer: 13759984.1
(22) Anmeldetag: 07.09.2013
(51) Int. Cl.: H02G 3/32

(54) **SYSTEM ZUR FÜHRUNG UND LAGESICHERUNG VON STRANGELEMENTEN**
SYSTEM FOR GUIDING AND SECURING THE POSITION OF STRAND ELEMENTS
SYSTÈME DE GUIDAGE ET DE MAINTIEN EN POSITION D'ÉLÉMENTS ALLONGÉS

(30) Priorität: 04.10.2012 DE 102012019490
(43) Veröffentlichungstag der Anmeldung: 12.08.2015
(73) Patentinhaber: HYDAC Accessories GmbH, 66280 Sulzbach/Saar (DE)
(72) Erfinder: EVEN, Rainer, 66123 Saarbrücken (DE)
(74) Vertreter: Bartels und Partner, Patentanwälte
(86) Internationale Anmeldenummer: PCT/EP2013/002691
(87) Internationale Veröffentlichungsnummer: WO 2014/053207

(56) Entgegenhaltungen:
- WO-A2-2010/077871
- DE-A1-102010 032 686
- DE-A1-102011 012 391
- GB-A- 2 168 544
- US-A- 5 702 076
- US-A1- 2012 048 616

## Beschreibung

Die Erfindung betrifft ein System zur Führung und Lagesicherung von Strangelementen, wie Kabeln, Schläuchen oder Rohren, insbesondere bei Windkraftanlagen, mit den Merkmalen im Oberbegriff von Anspruch 1.

Befestigungssysteme dieser Art sind Stand der Technik. Beispielsweise offenbart das Dokument DE 10 2010 032 687 A1 ein Befestigungssystem dieser Gattung, das insbesondere für eine Benutzung bei Windkraftanlagen vorgesehen ist. Um die in Windkraftanlagen erzeugten Energien abzuführen, sowie für andere betriebliche Zwecke, wie Steuerung, Überwachung und dergleichen, sind Strangelemente, wie Kabel zur Leistungsübertragung, Schläuche, Rohre und/oder Leitungen für Steuerungs- oder Kommunikationszwecke, die vom Maschinenhaus in den Turm führen, an entsprechenden Tragstrukturen, beispielsweise den Turmsegmenten, zuverlässig festzulegen.

Bei der vorstehend genannten, bekannten Lösung sind zu diesem Zweck im Grundkörper Strangdurchführungen derart ausgebildet, dass sie in einer sich zumindest über einen Teil eines Ringes erstreckenden Folge mit außenliegender Öffnung aufeinanderfolgen.

Die GB 2 168 544 A beschreibt ein gattungsgemäßes System zur Führung und Lagesicherung von Strangelementen mit einem Grundkörper, der zumindest eine Strangdurchführung ausbildet, die einen Aufnahmeraum für mindestens ein Strangelement begrenzt, wobei die jeweiligen Strangdurchführungen durch Einsätze in Form eigenständiger Bauteile gebildet sind, wobei eine Arretiereinrichtung vorgesehen ist, die Arretierelemente zur Bildung einer formschlüssigen Verrastung der jeweiligen Einsätze am Grundkörper aufweist, wobei ein Grundkörper vorgesehen ist, dessen Rand längs zumindest eines Teils eines Kreises verläuft, wobei entlang des Randes des Grundkörpers verteilt in diesem Durchgänge gebildet sind, in denen Einsätze aufnehmbar sind, wobei der Grundkörper die Form eines Sternkörpers mit Armen, deren Enden auf einer Kreislinie liegen, besitzt, und wobei zwischen den Armen Durchgänge für einen jeweiligen Einsatz gebildet sind.

Weitere derartige Systeme gehen aus der DE 10 2011 012 391 A1, der DE 10 2010 032 686 A1, der US 5 702 076 und der US 2012/0048616 A1 hervor.

Ausgehend von diesem Stand der Technik stellt sich die Erfindung die Aufgabe, ein System der besagten Art zur Verfügung zu stellen, das einfach und rationell und dadurch kostengünstig herstellbar ist.

Erfindungsgemäß ist diese Aufgabe durch ein System gelöst, das die Merkmale des Patentanspruchs 1 in seiner Gesamtheit aufweist.

Demgemäß besteht eine wesentliche Besonderheit der Erfindung darin, der Grundkörper in Form einer Trägerplatte ausgebildet ist, und dass an dem dem Zentrum des Sternkörpers zugewandten Ende der Einsätze vorspringende Hakenteile mit Rastflächen vorgesehen sind, die in zugeordnete Bohrungen des Sternkörpers zur Bildung der Arretierung eingreifen.

Es ist ferner vorgesehen, dass die jeweiligen Strangdurchführungen durch Einsätze in Form eigenständiger Bauteile gebildet sind und dass eine Arretiereinrichtung vorgesehen ist, die Arretierelemente zur Bildung einer formschlüssigen Verrastung der jeweiligen Einsätze am Grundkörper aufweist.

Bei den Systemen des Standes der Technik ist die Herstellung des Grundkörpers aufwendig, weil dieser nicht nur ein die Strangdurchführungen tragendes Bauteil ist, sondern durch entsprechende Formgestaltung auch die Strangdurchführungen ausbildet. Neben der hierfür erforderlichen speziellen Formgestaltung stellt der Grundkörper bei einer beispielsweise bei Windkraftanlagen in Frage kommenden größeren Anzahl von Strangdurchführungen für gegebenenfalls größere Strangdurchmesser ein Bauteil großer Gesamtabmessungen dar. Dies zwingt zur Benutzung großformatiger Werkzeuge, beispielsweise für das Spritzgießen des Grundkörpers, wodurch die Herstellung kostenintensiv ist. Dadurch, dass im Gegensatz hierzu bei der Erfindung gesonderte Einsätze die jeweiligen Strangdurchführungen bilden, die am betreffenden Grundkörper arretierbar sind, eröffnet sich die Möglichkeit, einen Grundkörper in einfacher Bauweise zu gestalten, weil dieser lediglich die Funktion eines Tragkörpers erfüllen muss, ohne selbst Strangdurchführungen auszubilden.

Das erfindungsgemäße System ist darüber hinaus insofern kostengünstig, als es für vielseitige Anwendbarkeit eine Art Baukastensystem darstellt, bei dem unterschiedliche Einsätze mit Aufnahmeräumen unterschiedlicher Form und Abmessung und in frei wählbarer Anordnung an einem Grundkörper arretierbar sind, der lediglich den Träger für Einsätze bilden muss, die in Anpassung an verschiedene Arten und Größen von Strangelementen unterschiedlich gestaltet sein können.

Es ist ein Grundkörper in Form einer Trägerplatte vorgesehen, deren Rand längs zumindest eines Teils eines Kreises verläuft, wobei entlang des Randes der Trägerplatte verteilt in dieser Durchgänge gebildet sind, in denen Einsätze aufnehmbar sind. Derartige Trägerplatten sind beispielsweise als Metallteil einfach und rationell herstellbar.

In vorteilhafter Weise kann die Arretiereinrichtung am jeweiligen Einsatz Arretierelemente in Form vorspringender Hakenteile aufweisen, die Rastflächen zur Bildung einer die Einsätze am Grundkörper sichernden Verhakung bilden.

Mit besonderem Vorteil kann die Arretiereinrichtung am Grundkörper Arretierelemente in Form von Ausnehmungen aufweisen, die einen formschlüssigen Eingriff zumindest eines Teils von am betreffenden Einsatz befindlichen Hakenteilen ermöglichen.

Bei besonders vorteilhaften Ausführungsbeispielen weisen die Aufnahmeräume für das Einlegen von Strangelementen eine seitliche Öffnung auf, die mittels einer eine Haltekraft auf eingelegte Strangelemente ausübenden Abdeckeinrichtung verschließbar ist. Dabei kann die Anordnung so getroffen sein, dass die Abdeckeinrichtung, wie es aus dem vorstehend erwähnten Dokument DE 10 2010 032 687 A1 an sich bekannt ist, Haltekörper sowie ein über diese geführtes Spannband aufweist, das die Haltekörper gegen in die Strangdurchführungen eingelegte Strangelemente verspannt.

Bei besonders vorteilhaften Ausführungsbeispielen hat die Trägerplatte die Form einer kreisrunden Scheibe, in der entlang des Umfangs angeordnete kreisrunde Durchgänge für Einsätze in Form von Ringkörpern vorgesehen sind.

Dabei kann die Anordnung mit Vorteil so getroffen sein, dass Einsätze in Form einteiliger, in die Durchgänge der Scheibe von einer Seite her einsteckbarer Ringkörper vorgesehen sind, an denen als Arretierelemente radial vorspringende Ansätze angeformt sind, die in einer Einführposition durch Aussparungen der Scheibe durchsteckbar sind und durch Verdrehen des Ringkörpers aus der Einführposition in eine Arretierposition den zugeordneten Rand des betreffenden Durchgangs der Scheibe hintergreifen. Dadurch ist eine Arretierung in der Art eines Bajonettverschlusses gebildet. Die als Grundkörper hierbei vorgesehene Kreisscheibe kann mit den Durchgängen für die Einsätze und den Aussparungen für die radial vorspringenden Ansätze der Ringkörper auf rationelle Weise aus einer Metallscheibe durch Lasertechnik gefertigt werden. Alternativ sind auch Hartgewebe und Wasserstrahlschneiden oder eine andere mechanische Bearbeitung möglich.

Bei besonders bevorzugten Ausführungsbeispielen, bei denen die radial vorspringenden Ansätze endseitig abgewinkelte Rastnasen aufweisen, lassen sich die betreffenden Ringkörper in der Arretierposition sichern, indem die Rastnasen mit Rastausnehmungen der Scheibe verrasten.

Alternativ können zweiteilige Ringkörper mit als Gleichteile gebildeten Ringhälften vorgesehen sein, die von der einen und der anderen Seite her in die betreffenden Durchgänge der Scheibe einsteckbar und mit Rastnasen und Rastaufnahmen als Arretierelemente versehen sind, die die Ringhälften beim Einstecken zur Bildung des zusammengesetzten Ringkörpers miteinander verrasten.

Nachstehend ist die Erfindung anhand von in der Zeichnung dargestellten Ausführungsbeispielen im Einzelnen erläutert. Es zeigen:
- Fig. 1: eine perspektivische Schrägansicht eines Ausführungsbeispieles des erfindungsgemäßen Systems mit drei an einer Trägerplatte festgelegten, als Strangdurchführungen dienenden Einsätzen, wobei ein zugehöriges Spannband weggelassen ist;
- Fig. 2: eine in größerem Maßstab gezeichnete perspektivische Schrägansicht lediglich eines einzelnen Einsatzes;
- Fig. 3: eine Draufsicht eines Ausführungsbeispieles mit einer Trägerplatte in Form eines Sternkörpers, wobei ein zugehöriges Spannband ebenfalls weggelassen ist;
- Fig. 4: eine Draufsicht, die den Sternkörper von Fig. 3 in Einzeldarstellung zeigt;
- Fig. 5: eine Draufsicht eines durch einen Ringkörper gebildeten Einsatzes mit einer Strangdurchführung in Form eines Durchlaufringes;
- Fig. 6: eine perspektivische Schrägansicht des Ringkörpers von Fig. 5;
- Fig. 7: eine Draufsicht eines Ausführungsbeispieles des erfindungsgemäßen Systems mit einer Trägerplatte in Form einer Kreisscheibe und mit vier durch Ringkörper gemäß Fig. 5 und 6 gebildeten Einsätzen;
- Fig. 8: eine perspektivische Schrägansicht, gesehen auf die Unterseite von Fig. 7;
- Fig. 9: eine Seitenansicht lediglich einer Ringhälfte zur Bildung eines zusammengesetzten Ringkörpers, der als Einsatz für ein weiter abgewandeltes Ausführungsbeispiel vorgesehen ist;
- Fig. 10: eine perspektivische Schrägansicht der Ringhälfte von Fig. 9;
- Fig. 11: eine perspektivische Schrägansicht des Ausführungsbeispieles, bei dem als Einsätze Ringkörper vorgesehen sind, die aus den Ringhälften von Fig. 9 und 10 zusammengesetzt sind;
- Fig. 12: einen vergrößerten Teilquerschnitt entsprechend der Schnittlinie 12-12 von Fig. 11;
- Fig. 13: eine Draufsicht eines der Fig. 3 ähnlichen, weiteren Ausführungsbeispieles, wobei ein Spannverschluss anstelle eines Spannbandes vorgesehen ist;
- Fig. 14: eine Einzeldarstellung des als Trägerplatte dienenden Sternkörpers des Ausführungsbeispieles von Fig. 13;
- Fig. 15: eine Seitenansicht eines weiteren Ausführungsbeispieles mit lediglich einem an einem Grundkörper befindlichen Einsatz, versehen mit Spannverschluss; und
- Fig. 16: eine Seitenansicht lediglich des Grundkörpers von Fig. 15.

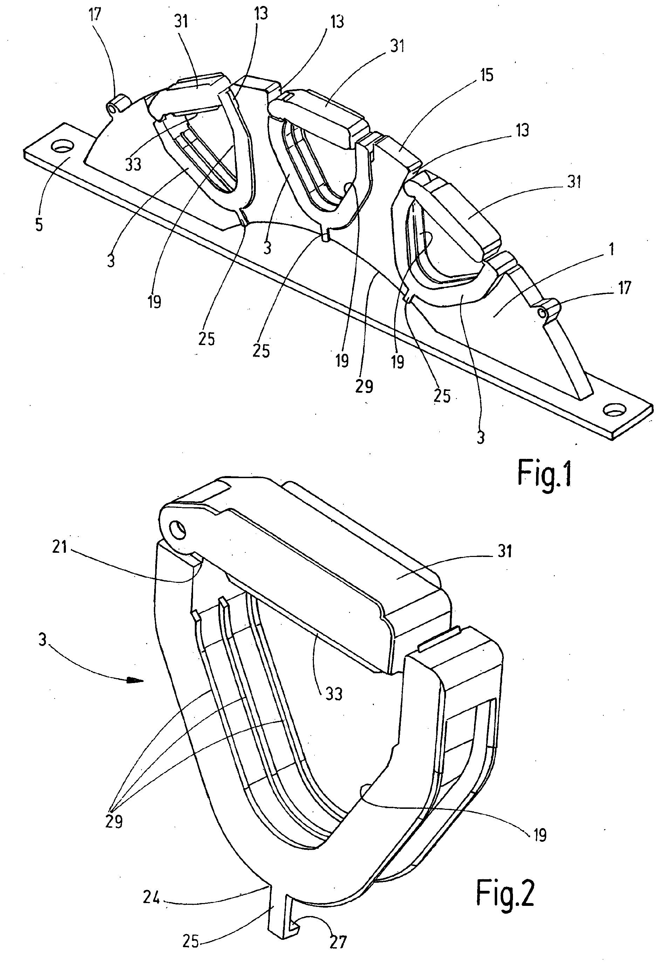

Die Ausführungsformen der Fig. 1 und 5 bis 10 dienen lediglich der Erläuterung des Hintergrundes der Erfindung und sind nicht Gegenstand eines Anspruches.

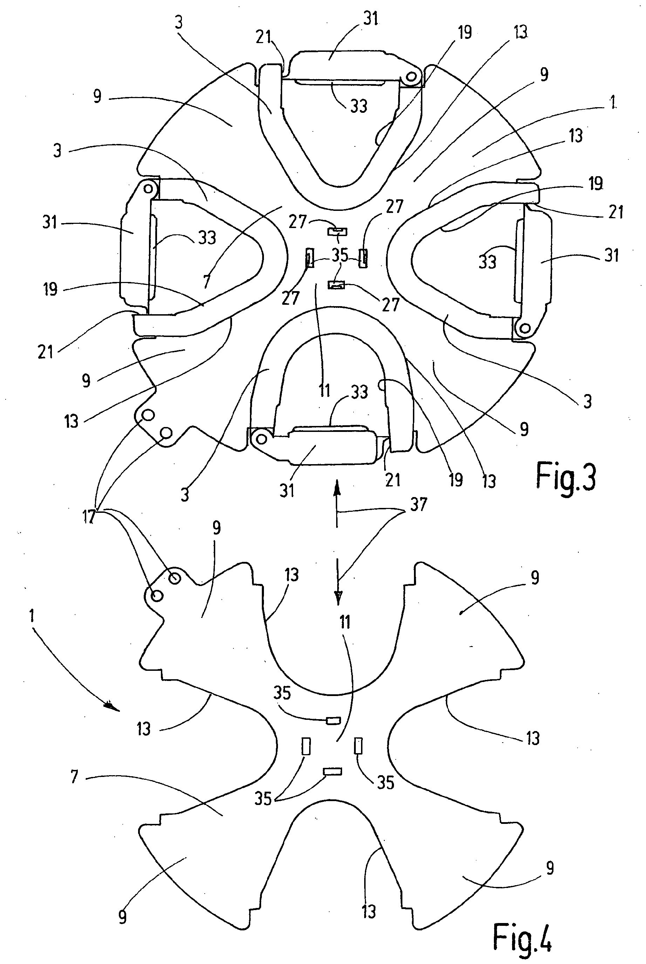

Die Fig. 1 bis 4 zeigen Ausführungsbeispiele des erfindungsgemäßen Systems, bei denen an einem Grundkörper in Form einer Trägerplatte 1 Einsätze 3 festgelegt sind, von denen einer in Fig. 2 in Einzeldarstellung gezeigt ist. Bei dem Beispiel von Fig. 1 hat die Trägerplatte 1 die Form eines Kreisbogenabschnittes, der aus einem metallischen Werkstoff besteht und mit einem zugehörigen Befestigungselement 5 verschweißt ist. Bei dem Ausführungsbeispiel von Fig. 3 und 4 hat die Trägerplatte 1 die Form eines Sternkörpers 7 mit vier Armen 9, die sich vom Zentrum 11 radial nach außen erstrecken und an ihren äußeren Enden eine gedachte Kreislinie definieren. Zwischen den Armen 9 sind Durchgänge 13 gebildet, die sich vom Umfangsrand in Richtung auf das Zentrum 11 erstrecken und in denen Einsätze 3 aufnehmbar und arretierbar sind. In entsprechender Weise sind beim Beispiel von Fig. 1 vom äußeren Umfangsrand 15 ausgehende Durchgänge 13 für Einsätze 3 gebildet.

Sowohl am Bogen der Trägerplatte 1 von Fig. 1 als auch am Sternkörper 7 von Fig. 3 und 4 sind am Außenumfang Verankerungsstellen 17 für ein nicht gezeigtes Spannband vorgesehen, das, wie es im Stand der Technik an sich bekannt ist (vgl. DE 10 2010 032 687 A1) über den Außenumfang der Trägerplatte 1 spannbar ist. Die Fig. 2 zeigt den Aufbau eines Einsatzes 3 in Form eines Spritzgießteiles aus einem thermoplastischen Kunststoffmaterial, das trogartig gestaltet ist und eine Strangdurchführung 19 begrenzt, die sich von einer äußeren Öffnung 21 mit einer im Wesentlichen V-artigen Verjüngung in Richtung auf ein Arretierungsende 24 erstreckt, an dem ein als Arretierelement vorgesehenes, vorspringendes Hakenteil 25 angeformt ist. Das Hakenteil 25 ist endseits abgewinkelt, so dass eine Rastfläche 27 gebildet ist. Bei dem Ausführungsbeispiel von Fig. 1 übergreift die Rastfläche 27 den Innenrand 29 des Bogens der Trägerplatte 1, um den betreffenden Einsatz 3 an der Trägerplatte 1 zu arretieren.

An der Innenseite der Strangdurchführung 19 der Einsätze 3 sind vorspringende Halterippen 29 als Strangaufnahme für über die Öffnung 21 eingelegte Strangelemente (die nicht dargestellt sind) ausgebildet. Die Öffnung 21 ist in der durch das oben angeführte Dokument an sich bekannten Weise mittels eines Drückerteiles 31 verschließbar, das als Teil der Abdeckeinrichtung in Zusammenwirkung mit dem (nicht gezeigten) Spannband auf eingelegte Strangelemente eine Haltekraft über ein federbelastetes Druckelement 33 ausübt. Die Drückerteile 31 sind, wie ebenfalls an sich bekannt, am Rand der Öffnung 21 schwenkbar angelenkt. Bei dem Ausführungsbeispiel der Fig. 3 und 4 greifen die Hakenteile 25 zur Arretierung der Einsätze 3 mit ihren Rastflächen 27in zugeordnete, rechteckförmige Bohrungen 35 ein, die im Zentrum 11 des Sternkörpers 7 ausgebildet sind. Die Fig. 2 zeigt eine Strangdurchführung 19 in Form eines im Wesentlichen V-förmigen Troges, wobei in Entsprechung hierzu auch die Durchgänge 13 in der Trägerplatte 1 eine entsprechende V-Form besitzen. Demgegenüber zeigen Fig. 3 und 4 an der mit Pfeilen 37 markierten Stelle eine U-Form der betreffenden Durchgänge 13 für einen Einsatz 3 in Form eines U-förmigen Troges, bei dem die Strangdurchführung 19 ebenfalls U-förmig gestaltet ist.

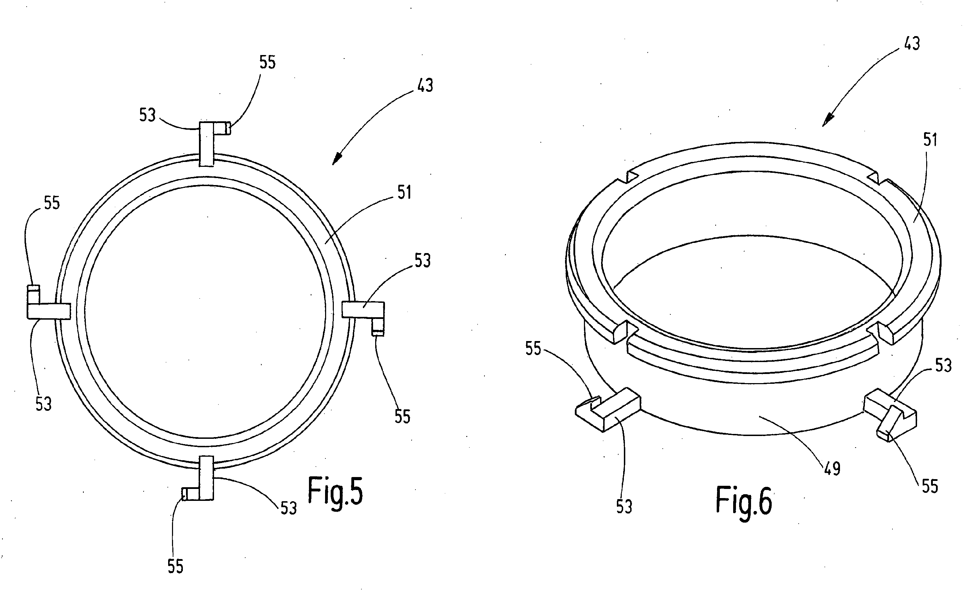

Die Fig. 5 bis 8 zeigen ein Ausführungsbeispiel, bei dem die Trägerplatte durch eine metallische Kreisscheibe 39 gebildet ist, in der kreisrunde Durchgänge 41 für Einsätze in Form von Ringkörpern 43 gebildet sind. Diese Durchgänge 41, sowie weitere Aussparungen 45 und 47 in der Kreisscheibe 39, sind durch vorzugsweise lasertechnische Bearbeitung gebildet.

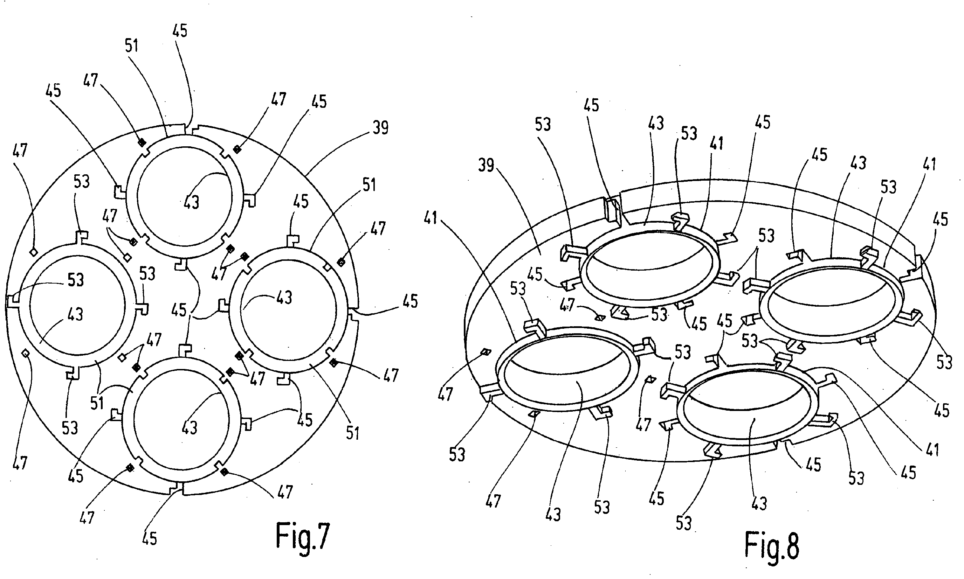

Wie Fig. 5 und 6 am deutlichsten zeigen, weisen die Ringkörper 43 ein Kreiszylinderteil 49 (Fig. 6) auf, das von der in Fig. 7 sichtbaren Oberseite der Kreisscheibe 39 her in die Durchgänge 41 einsteckbar ist, wobei ein radial vorspringender Endrand 51 auf der Oberseite der Kreisscheibe 39 aufliegt. Am entgegengesetzten, unteren Ende des Zylinderteiles 49 sind als Arretierelemente radial vorspringende Ansätze 53 angeformt, die beim Einstecken der Ringkörper 43 in die Durchgänge 41 durch die Aussparungen 45 der Schiebe 39 durchsteckbar sind. Die Fig. 7 zeigt den äußerst linksseitig gelegenen Ringkörper 43 in seiner Einführposition, in der die Ansätze 53 auf die Aussparungen 45 der Scheibe 39 ausgerichtet sind, so dass die Einsätze 53 durch die Aussparungen 45 durchsteckbar sind und der Ringkörper 43 in die Durchgänge 41 einsetzbar ist. Demgegenüber sind die übrigen Ringkörper 43 in Fig. 7 sowie in Fig. 8 aus der Einführposition in die Endposition oder Arretierposition verdreht, bei der sich die Ansätze 53 als Arretierelemente an der Unterseite der Scheibe 39 befinden, siehe Fig. 8, wo die Unterseite der Scheibe 39 sichtbar ist. Die Aussparungen 45 bilden in Zusammenwirkung mit den Ansätzen 53 und mit Hilfe der Verdrehbarkeit der Ringkörper 43 somit eine Art Bajonettverschluss zur Arretierung der Ringkörper 43 an der Scheibe 39. Wie die Fig. 5 und 6 zeigen, weisen die Ansätze 53 endseitig abgewinkelte Rastnasen 55 auf, die beim Verdrehen des Ringkörpers 43 in die Endposition in die Aussparungen 47 einfallen und die Ringkörper 43 in der der Arretierposition entsprechenden Drehposition sichern. Die Fig. 8 zeigt die gleiche Situation wie Fig. 7.

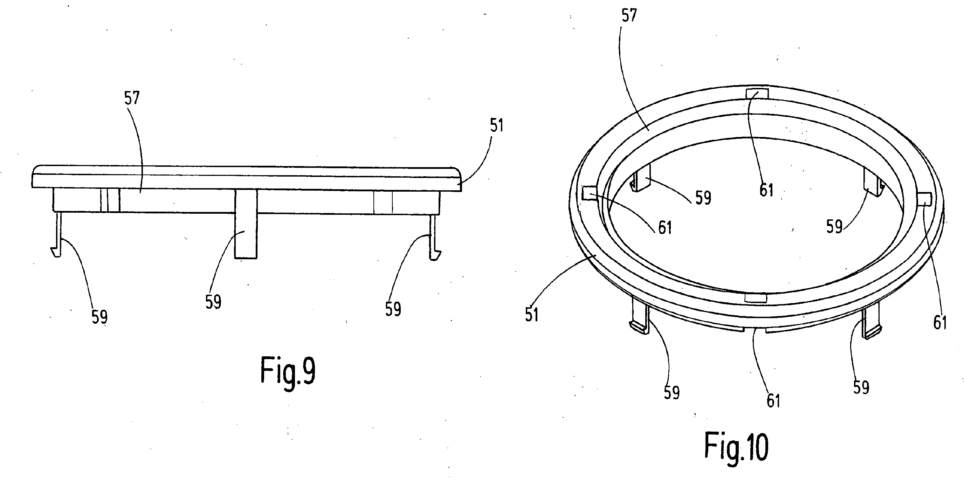

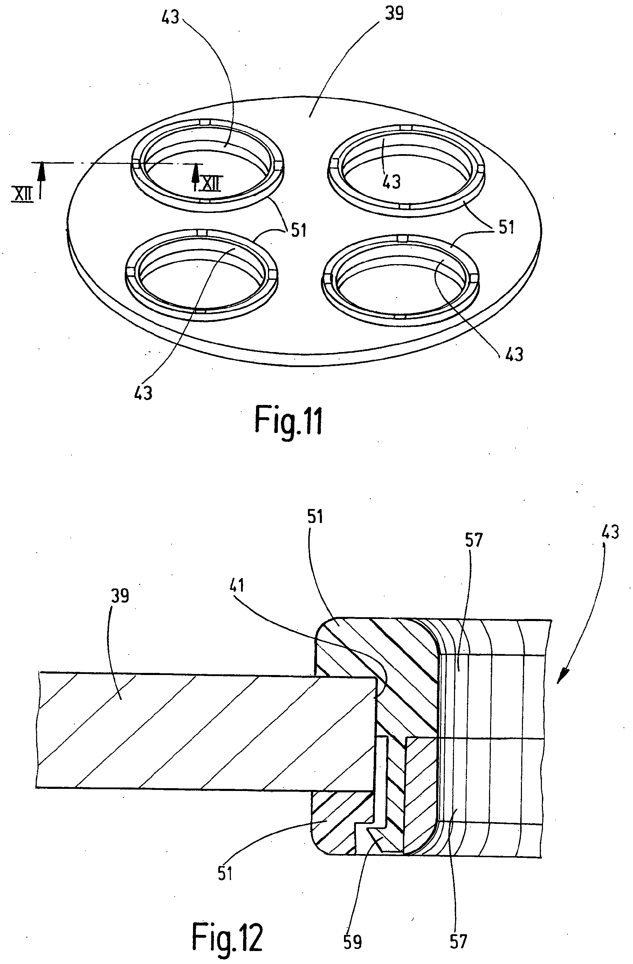

Die Fig. 9 bis 12 zeigen ein weiteres Ausführungsbeispiel mit einem Grundkörper in Form einer Kreisscheibe 39, die jedoch außer den kreisrunden Durchgängen 41 für Einsätze keine weiteren Aussparungen enthält. Die Einsätze sind wiederum in Form von Ringkörpern 43 vorgesehen, die im Unterschied zu Fig. 5 bis 8 nicht als einteilige Kunststoffkörper gestaltet sind, sondern zweiteilig ausgebildet sind. Hierfür sind zwei gleiche Ringhälften 57 vorgesehen, die Rastnasen 59 und Rastaufnahmen 61 aufweisen. Beim Einstecken in die Durchgänge 41 der Scheibe 39 von deren einen und deren anderen Seite her verrasten die Ringhälften 57 zur Bildung des zusammengesetzten Ringkörpers 43 miteinander, wobei die radial vorspringenden Endränder 51 an Ober- und Unterseite der Scheibe 39 anliegen.

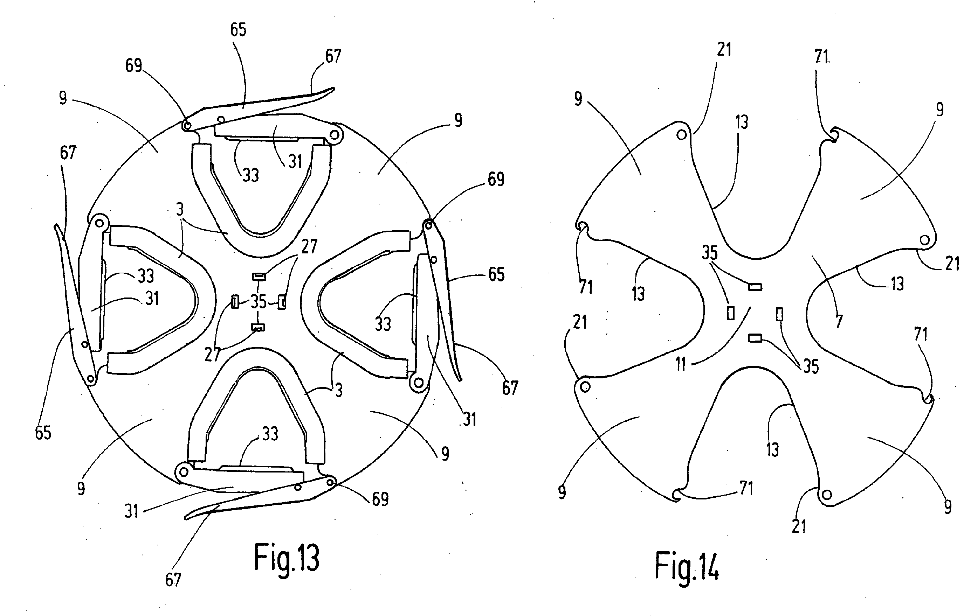

Die Fig. 13 und 14 zeigen ein Ausführungsbeispiel, das dem Beispiel von Fig. 3 und 4 entspricht, abgesehen davon, dass die Abdeckeinrichtung für die Zusammenwirkung mit den Drückerteilen 31 kein Spannband vorsieht, sondern einen Spannverschluss mit einem ein Federpaket enthaltenden, an sich bekannten Spannhebel 65. Dieser weist an dem der Handhabe 67 entgegengesetzten Ende einen Zapfen 69 auf, der beim Schwenken des Spannverschlusses in die die Öffnung 13 des betreffenden Durchganges 13 verschließende Position in eine Ausnehmung 71 am Rand der Öffnungen 21 der Durchgänge 13 einhängbar ist.

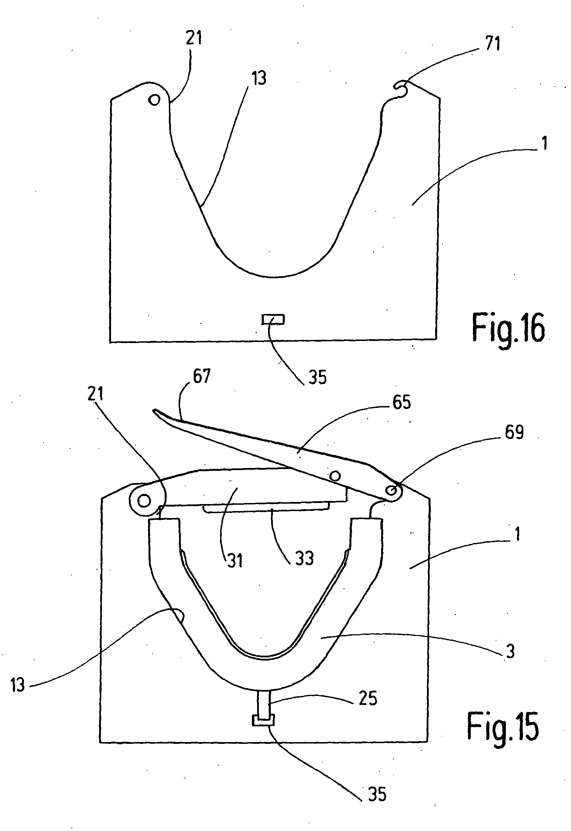

Die Fig. 15 und 16 zeigen ein Ausführungsbeispiel, bei dem als Grundkörper eine Trägerplatte 1 mit lediglich einem Durchgang 13 zur Aufnahme eines einzigen Einsatzes 3 vorgesehen ist. Auch bei diesem Ausführungsbeispiel ist zur Arretierung des Einsatzes 3 eine rechteckförmige Bohrung 35 für die Verhakung mit der Rastfläche des Hakenteiles 25 des Einsatzes 3 vorgesehen. Als Abdeckeinrichtung zum Verschließen der Öffnung 21 des Durchganges 13 ist, wie beim Beispiel von Fig. 13 und 14, ein Spannverschluss vorgesehen.

## Patentansprüche

1. System zur Führung und Lagesicherung von Strangelementen, wie Kabeln, Schläuchen oder Rohren, insbesondere bei Windkraftanlagen, mit einem Grundkörper (1, 7, 39), der zumindest eine Strangdurchführung ausbildet, die einen Aufnahmeraum (19) für mindestens ein Strangelement begrenzt, wobei die jeweiligen Strangdurchführungen durch Einsätze (3, 43) in Form eigenständiger Bauteile gebildet sind, wobei eine Arretiereinrichtung vorgesehen ist, die Arretierelemente (25, 51, 53) zur Bildung einer formschlüssigen Verrastung der jeweiligen Einsätze (3, 43) am Grundkörper (1, 7, 39) aufweist, wobei ein Grundkörper (1, 7, 39) in Form einer Trägerplatte (1,7) vorgesehen ist, dessen Rand (15) längs zumindest eines Teils eines Kreises verläuft, wobei entlang des Randes (15) des Grundkörpers (1, 7, 39) verteilt in diesem Durchgänge (13) gebildet sind, in denen Einsätze (3) aufnehmbar sind, wobei der Grundkörper (1, 7, 39) die Form eines Sternkörpers (7) mit Armen (9), deren Enden auf einer Kreislinie liegen, besitzt, und wobei zwischen den Armen (9) Durchgänge (13) für einen jeweiligen Einsatz (3) gebildet sind, **dadurch gekennzeichnet,**
**dass** an dem dem Zentrum (11) des Sternkörpers (7) zugewandten Ende der Einsätze (3) vorspringende Hakenteile (25) mit Rastflächen (27) vorgesehen sind, die in zugeordnete Bohrungen (35) des Sternkörpers (7) zur Bildung der Arretierung eingreifen.

2. System nach Anspruch 1, **dadurch gekennzeichnet, dass** die Arretiereinrichtung am jeweiligen Einsatz (3) Arretierelemente in Form vorspringender Hakenteile (25) mit Rastflächen (27) zur Bildung einer die Einsätze (3) am Grundkörper (1, 7) sichernden Verhakung aufweist.

3. System nach Anspruch 1 oder 2, **dadurch gekennzeichnet, dass** die Arretiereinrichtung am Grundkörper (7) Arretierelemente in Form von Ausnehmungen (35) aufweist, die einen formschlüssigen Eingriff zumindest eines Teils (27) von am betreffenden Einsatz (3) befindlichen Hakenteilen (25) ermöglichen.

4. System nach einem der vorstehenden Ansprüche, **dadurch gekennzeichnet, dass** die Einsätze (3) Aufnahmeräume (19) unterschiedlicher Form und/oder Größe aufweisen.

5. System nach Anspruch 4, **dadurch gekennzeichnet, dass** die Aufnahmeräume (19) für das Einlegen von Strangelementen eine seitliche Öffnung (21) aufweisen, die mittels einer eine Haltekraft auf eingelegte Strangelemente ausübenden Abdeckeinrichtung (31, 33) verschließbar ist.

6. System nach einem der vorstehenden Ansprüche, **dadurch gekennzeichnet, dass** die Trägerplatte die Form einer kreisrunden Scheibe (39) besitzt, in der entlang des Umfangs angeordnete kreisrunde Durchgänge (41) für Einsätze in Form von Ringkörpern (43) vorgesehen sind.

7. System nach Anspruch 6, **dadurch gekennzeichnet, dass** Einsätze in Form einteiliger, in die Durchgänge (41) der Scheibe (39) von einer Seite her einsteckbarer Ringkörper (43) vorgesehen sind, an denen als Arretierelemente radial vorspringende Ansätze (53) angeformt sind, die in einer Einführposition durch Aussparungen (45) der Scheibe durchsteckbar sind und durch Verdrehen des Ringkörpers (43) aus der Einführposition in eine Arretierposition den zugeordneten Rand des betreffenden Durchgangs (41) der Scheibe (39) hintergreifen.

8. System nach Anspruch 7, **dadurch gekennzeichnet, dass** die Ansätze (53) endseitig abgewinkelte Rastnasen (55) aufweisen, die bei der Arretierposition mit Rastaussparungen (47) der Scheibe (39) verrasten.

9. System nach einem der Ansprüche 6 bis 8, **dadurch gekennzeichnet, dass** zweiteilige Ringkörper (43) mit als Gleichteile gebildeten Ringhälften (57) vorgesehen sind, die von der einen und der anderen Seite her in die betreffenden Durchgänge (41) der Scheibe (39) einsteckbar und mit Rastnasen (59) und Rastaufnahmen (61) als Arretierelemente versehen sind, die die Ringhälften (57) beim Einstecken zur Bildung des zusammengesetzten Ringkörpers (43)

## Claims

1. A system for guiding and securing the position of strand elements such as cables, hoses or tubes, in particular in wind turbines, having a base body (1, 7, 39) which forms at least one strand passage which delimits a receiving space (19) for at least one strand element, the respective strand passages being formed by inserts (3, 43) in the form of independent components, a locking device being provided which has locking elements (25, 51, 53) for forming form-fitting latching of the respective inserts (3, 43) on the base body (1, 7, 39), a base body (1, 7, 39) being provided in the form of a carrier plate (1, 7), the edge (15) of which runs along at least part of a circle, passages (13) being formed in the base body (1, 7, 39) distributed along the edge (15) of the latter, in which passages inserts (3) can be accommodated, the base body (1, 7, 39) being in the form of a star-shaped body (7) with arms (9), the ends of which lie on a circular line, and passages (13) being formed between the arms (9) for a respective insert (3), **characterised in that** projecting hook parts (25) with latch surfaces (27) are provided on the end of the inserts (3) facing the centre (11) of the star-shaped body (7), which latch surfaces engage in assigned bore holes (35) of the star-shaped body (7) to form the lock.

2. The system according to Claim 1, **characterised in that** the locking device has locking elements on the respective insert (3) in the form of projecting hook parts (25) with latch surfaces (27) for forming a catch securing the inserts (3) to the base body (1, 7).

3. The system according to Claim 1 or 2, **characterised in that** the locking device on the base body (7) has locking elements in the form of recesses (35) which enable form-fitting engagement of at least one part (27) of hook parts (25) located on the respective insert (3).

4. The system according to any of the preceding claims, **characterised in that** the inserts (3) have receiving spaces (19) of different shapes and/or sizes.

5. The system according to Claim 4, **characterised in that** the receiving spaces (19) have a lateral opening (21) for the insertion of strand elements, which opening can be closed by means of a cover device (31, 33) exerting a retaining force upon inserted strand elements.

6. The system according to any of the preceding claims, **characterised in that** the carrier plate is in the form of a circular disc (39) in which circular passages (41) for inserts in the form of annular bodies (43) are provided, arranged along the periphery.

7. The system according to Claim 6, **characterised in that** inserts, that can be pushed from one side into the passages (41) of the disc (39), are provided in the form of one-part annular bodies (43) on which radially projecting shoulders (53) are integrally moulded as locking elements which, in an insertion position, can penetrate through recesses (45) of the disc and, by rotation of the annular body (43) out of the insertion position into a locking position, engage behind the assigned edge of the respective passage (41) of the disc (39).

8. The system according to Claim 7, **characterised in that** the shoulders (53) have angled latching lugs (55) on the ends, said latching lugs latching with latch recesses (47) of the disc in the locking position.

9. The system according to any of Claims 6 to 8, **characterised in that** two-part annular bodies (43) are provided with ring halves (57) formed as identical parts which can be pushed from one and the other side into the respective passages (41) of the disc (39) and are provided with latching lugs (59) and latch receivers (61) as locking elements which, during pushing in, latch the ring halves (57) with each other in order to form the assembled annular body (43).

## Revendications

1. Système de guidage et de maintien en position d'éléments oblongs, comme des câbles, des tubes souples ou des tuyaux, notamment dans des éoliennes, comprenant un corps(1, 7, 39) de base, qui constitue au moins une traversée délimitant un espace (19) de réception d'au moins un élément oblong, les traversées respectives étant formées par des inserts (3, 43) sous la forme de pièces indépendantes, dans lequel il est prévu un dispositif d'arrêt, qui a des éléments (25, 51, 53) d'arrêt pour former un encliquetage à complémentarité de forme des inserts (3, 43) respectifs au corps (1, 7, 39) de base, dans lequel il est prévu un corps (1, 7, 39) de base sous la forme d'une plaque (1, 7) de support, dont le bord (15) s'étend suivant au moins une partie d'un cercle, dans lequel, le long du bord (15) du corps (1, 7, 39) de base, en y étant répartis, sont formés des passages (13) dans lesquels les inserts (3) peuvent être reçus, le corps (1, 7, 39) de base ayant la forme d'un corps (7) en étoile ayant des bras (9), dont les extrémités se trouvent sur une ligne circulaire et dans lequel, entre les bras (9), sont formés des passages (13) pour un insert (3) respectif, **caractérisé en ce qu'**à l'extrémité, tournée vers le centre (11) du corps (7) en étoile, des inserts (3) sont prévues des parties (25) de crochet en saillie ayant des surfaces (27) d'encliquetage, qui, pour former l'arrêt, pénètrent dans des trous (35) associés du corps (7) en étoile.

2. Système suivant la revendication 1, **caractérisé en ce que** le dispositif d'arrêt a, sur l'insert (3) respectif, des éléments d'arrêt sous la forme de parties (25) en crochet en saillie ayant des surfaces (27) d'encliquetage pour former un accrochage maintenant les inserts (3) sur le corps (1, 7) de base.

3. Système suivant la revendication 1 ou 2, **caractérisé en ce que** le dispositif d'arrêt a, sur le corps (7) de base, des éléments d'arrêt sous la forme de creux (35), qui rendent possible une pénétration à complémentarité de forme d'au moins une partie de parties (25) de crochet se trouvant sur l'insert (3) concerné.

4. Système suivant l'une des revendications précédentes, **caractérisé en ce que** les inserts (3) ont des espaces (19) de réception de forme et/ou de dimension différentes.

5. Système suivant la revendication 4, **caractérisé en ce que** les espaces (19) de réception ont, pour l'insertion d'éléments oblongs, une ouverture (21) latérale, qui peut être fermée au moyen d'un dispositif (31, 33) de couverture, appliquant une force de maintien aux éléments oblongs insérés.

6. Système suivant l'une des revendications précédentes, **caractérisé en ce que** la plaque de support a la forme d'un disque (39) circulaire, dans lequel sont prévus des passages (41) circulaires, disposés le long du pourtour pour des inserts sous la forme de corps (43) annulaires.

7. Système suivant la revendication 6, **caractérisé en ce que** les inserts sont prévus sous la forme de corps (43) annulaires, qui sont d'une seule pièce, qui peut être enfichée d'un côté dans les passages (41) du disque (39), et sur lesquels sont formés des ergots (53), en saillie radialement, comme éléments d'arrêt, qui, dans une position d'insertion, peuvent être enfichés dans des évidements (45) du disque et, par rotation du corps (43) annulaire, de la position d'introduction à une position d'arrêt, prennent par derrière le bord associé du passage (41) concerné du disque (39).

8. Système suivant la revendication 7, **caractérisé en ce que** les ergots (53) ont, du côté de l'extrémité, des becs (55) d'encliquetage coudés, qui, en la position d'arrêt, s'encliquètent avec des évidements (47) d'encliquetage du disque (39).

9. Système suivant l'une des revendications 6 à 8, **caractérisé en ce qu'**il est prévu des corps (43) annulaires en deux parties, qui ont des moitiés (57) d'anneaux égales, qui peuvent être enfichées, d'un côté ou de l'autre, dans les passages (41) concernés du disque (39) et qui sont pourvues de becs (59) d'encliquetage et de logements (61) d'encliquetage, comme éléments d'arrêt, qui encliquètent les moitiés (57) d'anneaux lors de l'enfichage, pour former le corps (43) annulaire composé.
